# EUROPEAN PATENT APPLICATION

(11) **EP 4 712 003 A1**
(43) Date of publication of application: **18.03.2026**
(21) Application number: 25190555.0
(22) Date of filing: 18.07.2025
(51) Int. Cl.: G06Q 30/0207, G06Q 20/20, G06Q 20/22, G06Q 20/38, G06Q 30/0226, G06Q 30/0238

(54) **LANGUAGE MODEL BASED OPTION SELECTION FRAMEWORK**

(30) Priority: 11.09.2024 US 202418882187
(71) Applicant: American Express Travel Related Services Co., Inc., New York, NY 10285-4900 (US)
(72) Inventor: FERENCZI, Andras L., New York, 10285 (US); PACKER, Hilary, New York, 10285 (US); EBY, Alaric M., New York, 10285 (US)
(74) Representative: Reddie & Grose LLP

(57) **Abstract**

Disclosed are various approaches for language model based options selections. In one example, a service (122) can generate a user interface (167) that identifies user interactions received from a client device (106) to register transaction instruments. Transaction facilitation websites (152) can be scraped to identify transaction instrument terms for the registered transaction instruments (173). An option selection language model (126) can be generated and trained to select a subset of the registered transaction instruments (173). The option selection language model (126), the transaction instrument data (172), and the transaction instrument terms (156) can be transmitted to the client device (106).

## Description

### CROSS-REFERENCE TO RELATED APPLICATIONS

This application claims priority to, and the benefit of, co-pending U.S. Patent Application No. 18/882,187, entitled "LANGUAGE MODEL BASED OPTION SELECTION FRAMEWORK" and filed on September 11, 2024, which is incorporated by reference as if set forth herein in its entirety.

### BACKGROUND

Web services such as websites, webapps and other Internet connected technologies can use standardized modules and programming practices that comply to one or more standards. For example, the World Wide Web Consortium (W3C) is a non-profit organization that creates standards and guidelines applicable to web services. The standards that are created and published by the W3C are royalty-free and can be used by anyone. The W3C also provides code that can define at least a portion of a standards-compliant Application Programming Interface (API) or module. As a result, W3C compliant websites, web applications, and other web services can generally be limited to features supported by the W3C standards.

A standards-compliant transaction handler can include a web application or module that can handle a request for a transaction on behalf of the user. A user can locally (e.g., local to a client device) register a number of transaction instruments in association with a standards-compliant transaction handler from W3C or another recognized standard provider. As a result, the standards-compliant transaction handler provides all of these transaction instruments every time a user navigates to a transaction-specific portion of a website that uses module to deal with transactions.

### BRIEF DESCRIPTION OF THE DRAWINGS

Many aspects of the present disclosure can be better understood with reference to the following drawings. The components in the drawings are not necessarily to scale, with emphasis instead being placed upon clearly illustrating the principles of the disclosure. Moreover, in the drawings, like reference numerals designate corresponding parts throughout the several views.
FIG. 1 is a drawing of a networked environment that includes components for a language model-based option selection framework according to various embodiments of the present disclosure.
FIG. 2 illustrates an example of implementing language model-based option selection using the components of the networked environment of FIG. 1 according to various embodiments of the present disclosure.
FIG. 3 illustrates an example of a user interface used in conjunction with the language model-based option selection framework according to various embodiments of the present disclosure.
FIG. 4 is a flowchart illustrating functionality of the provider service performed in conjunction with other components of the networked environment of FIG. 1 to implement language model-based option selection according to various embodiments of the present disclosure.
FIG. 5 is a flowchart illustrating functionality of the enterprise service performed in conjunction with other components of the networked environment of FIG. 1 to implement language model-based option selection according to various embodiments of the present disclosure.
FIG. 6 is a flowchart illustrating functionality of the enterprise-hosted provider instructions performed in conjunction with other components of the networked environment of FIG. 1 to implement language model-based option selection according to various embodiments of the present disclosure.
FIG. 7 is a flowchart illustrating functionality of the option selection agent performed in conjunction with other components of the networked environment of FIG. 1 to implement language model-based option selection according to various embodiments of the present disclosure.

### DETAILED DESCRIPTION

Disclosed are various aspects of a language model-based option selection framework. Enterprise web services such as websites, webapps and other Internet connected technologies can use modules and programming norms that comply to one or more standards. For example, the World Wide Web Consortium (W3C) is a non-profit organization that creates standards and guidelines applicable to web services. Other standards-providing organizations can include the Internet Engineering Task Force (IETF), Internet Society (ISOC), Internet Architecture Board (IAB), Internet Research Task Force (IRTF), and others. A standards-providing organization can provide modules of executable code as well as non-executable items for standards-compliant websites. Standards-compliant websites, web applications, and other web services can generally be limited to features supported by the associated standards.

A standards-compliant transaction handler can include a module or a web application that can handle a request for a transaction on behalf of the user. A standards-compliant transaction handler can include or utilize a standards-compliant Application Programming Interface (API). A user can locally (e.g., local to a client device) pre-enter a number of transaction instruments in association with the standards-compliant transaction handler. Typically, the standards-compliant transaction handler is designed to provide all pre-entered transaction instruments every time a user navigates to a transaction-specific portion of a website that uses the standards-compliant handler to deal with transactions. However, the various transaction instruments can be associated with different terms and conditions that can provide different benefits that can be objectively or subjectively preferable. Further, user can generally tend to select a particular transaction instrument for transactions with a particular enterprise, with a particular type of goods and services, for transactions of a particular magnitude, among other correlations.

The present disclosure describes mechanisms that can override the typical or routine sequence of events ordinarily triggered by using a standards-compliant transaction handler to seamlessly provide language model-based option selections and/or filtering operations when performing a transaction with a website that uses the standards-compliant transaction handler for transactions. This can include the use of client-side language models that can leverage locally stored (e.g., local to a client device) transaction data, transaction histories, registered transaction instruments, and other information to make transaction instrument selections using language model. For example, in some instances, the client-side language models can provide to the user one or more suggested transaction instruments to pay for a transaction that takes into account terms and conditions associated with the transaction instrument (e.g., rewards points, merchant discounts, rebates, bonuses awards, or other incentives). In some instances, the client-side language model could pre-select a transaction instrument to pay for the instrument that the client-side language model would predict that the user would selecting based on account terms and conditions associated with the transaction instrument (e.g., rewards points, merchant discounts, rebates, bonuses awards, or other incentives). As an illustrative example, a client-side language model could select or suggest a transaction instrument that would earn a highest number of reward points for the transaction to a user who prioritizes or prefers to receiver reward points. Meanwhile, a client-side language model could select or suggest a transaction instrument that would result in lowest price paid by the user for those users who prefer to pay the lease amount possible.

The mechanisms described can provide a number of benefits over other technologies, including those that are performed using computer systems. For example, the language model-based option selection concepts described can override the typical or routine sequence of events ordinarily triggered by using a standards-compliant transaction handler. The language model-based option selection concepts described can also increase the efficiency of using computer systems by providing users the benefit of a simplified user interface with a language model selected set of one or more options that prevents scrolling through many options to manually identify a preferred option, as well as prevents navigating to other websites in other tabs to identify and compare terms and conditions. The simplified user interface with language model selected options can provide additional benefits to users of mobile devices where screen area is limited, processing power and speed is limited, and navigation is more arduous. The language model-based option selection concepts can also provide speed benefits that are provided by overriding the typical or routine sequence of events ordinarily triggered by using a standards-compliant transaction handler using the stateless provider services, enterprise-hosted provider instructions, and the client-side language models or any subset thereof. The language model-based option selection concepts can also provide security and privacy benefits by using client-side language models and stateless provider hosted services or any subset thereof.

In the following discussion, a general description of language model-based option selection framework is provided, followed by a discussion of the operation of the same. Although the following discussion provides illustrative examples of the operation of various components of the present disclosure, the use of the following illustrative examples does not exclude other implementations that are consistent with the principals disclosed by the following illustrative examples.

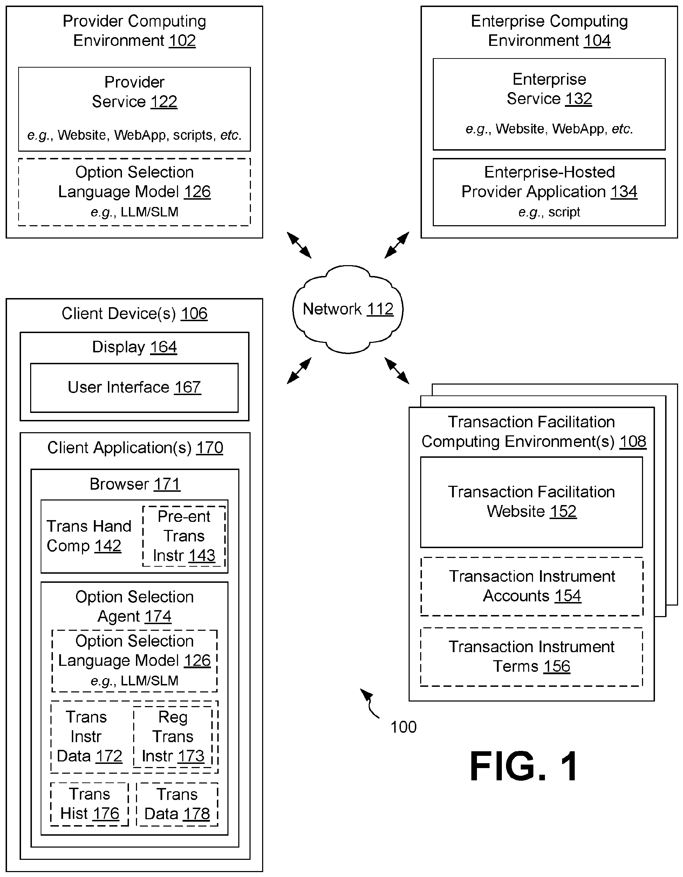

With reference to FIG. 1, shown is a networked environment 100 according to various embodiments. The networked environment 100 can include a provider computing environment 102, an enterprise computing environment 103, a client device 106, and transaction facilitation computing environments 108 in data communication using a network 112. Further embodiments can include multiple provider computing environments 102, enterprise computing environments 103, and client devices 106, as well as the transaction facilitation computing environments 108 in data communication using the network 112.

The network 112 can include wide area networks (WANs), local area networks (LANs), personal area networks (PANs), or a combination thereof. These networks can include wired or wireless components or a combination thereof. Wired networks can include Ethernet networks, cable networks, fiber optic networks, and telephone networks such as dial-up, digital subscriber line (DSL), and integrated services digital network (ISDN) networks. Wireless networks can include cellular networks, satellite networks, Institute of Electrical and Electronic Engineers (IEEE) 802.11 wireless networks (*i.e*., WI-FI^{®}), BLUETOOTH^{®} networks, microwave transmission networks, as well as other networks relying on radio broadcasts. The network 112 can also include a combination of two or more networks 112. Examples of networks 112 can include the Internet, intranets, extranets, virtual private networks (VPNs), and similar networks.

A respective one of the computing environments corresponding to the provider computing environment 102, the enterprise computing environment 103, and the transaction facilitation computing environments 108 can include one or more computing devices that include a processor, a memory, and/or a network interface. For example, the computing devices can be configured to perform computations on behalf of other computing devices or applications. As another example, such computing devices can host and/or provide content to other computing devices in response to requests for content.

For example, respective computing environments can employ a plurality of computing devices that can be arranged in one or more server banks or computer banks or other arrangements. Such computing devices can be located in a single installation or can be distributed among many different geographical locations. For example, a computing environment can include a plurality of computing devices that together can include a hosted computing resource, a grid computing resource, a cloud computing resource, or any other distributed computing arrangement. In some cases, the computing environment can correspond to an elastic computing resource where the allotted capacity of processing, network, storage, or other computing-related resources can vary over time. Various applications or other functionality can be executed in the computing environment. The components executed on a computing environment can include applications, services, processes, systems, engines, or functionality not discussed in detail herein.

Various data accessible to a computing environment can be stored in a datastore that is accessible to that computing environment. The datastore can be representative of a plurality of datastores, which can include relational databases or non-relational databases such as object-oriented databases, hierarchical databases, hash tables or similar key-value datastores, as well as other data storage applications or data structures. Moreover, combinations of these databases, data storage applications, and/or data structures can be used together to provide a single, logical, datastore. The data stored in the datastore is associated with the operation of the various applications or functional entities described below.

The provider computing environment 102 can provide an environment for the provider service 122 and other executable instructions. The provider service 122 can refer to a website, web application, backend service, and other instructions. The provider service 122 can also include a script such as JavaScript^{®} instructions that are designed to operate in conjunction with the enterprise-hosted provider application 134 to enable language model-based option selections. The provider service 122 can communicate with the enterprise-hosted provider application 134 using a secure cross-domain communication method, such as a postMessage method. In some examples, the script or other provider-hosted instructions can include a stateless service as a portion of the provider service 122. A stateless portion of the service can, for example, decline to save information from individual requests and discards or deletes data between sessions. Generally, the provider service 122 can provide the client device 106 with an option selection language model 126 that is used to intelligently limit a set of available options provided by a standards-compliant transaction handler used by the enterprise service 132.

The option selection language model 126 can refer to a large language model or a small language model that limits an available a set of available options to a subset of the available options. In some examples, the options can include a set of registered transaction instruments 173 that can be used to complete a transaction, for example, by contract confirmation, payment, providing personally identifying information such as name and address, and so on. The option selection language model 126 can include a text-based language model such as GPT-3 (Generative Pre-trained Transformer 3) from OpenAI^{®}, Llama (Large Language Model Meta AI (Artificial Intelligence)), or other generative artificial intelligence models. Some implementations of the option selection language model 126 can include a multimodal language model that is trained and/or provided with inputs that include multiple "modes" or types of data such as textual data, image data, audio data, and so on. As a result, the option selection language model 126 can also refer to a multimodal language model such as GPT-4 (Generative Pre-trained Transformer 4) from OpenAI^{®}, Kosmos-1 from Microsoft^{®}, or other multimodal generative artificial intelligence models.

The option selection language model 126 can make selections among registered transaction instruments 173 based at least in part on inputs including transaction instrument terms 156, a locally stored transaction history 176, and transaction data 178 for a particular transaction. Additional inputs can include information such as a time, a date, and other information. The option selection language model 126 can include a relatively small language model that the provider service 122 has trained to select a subset of registered transaction instruments 173 based at least in part on a predetermined balance of overall value, cash benefits, travel benefits, protections and other specific terms described in transaction instrument terms 156.

The provider service 122 can train and/or fine tune weights of the option selection language model 126 based at least in part on training data that includes transaction instrument selections that are verified as 'correct' for the purposes of training. A verified transaction instrument selection can indicate a particular transaction instrument selection in association with a respective set of transaction instrument terms 156, a respective transaction history 176, and transaction data 178 for a particular transaction. The provider service 122 can also fine tune weights of the option selection language model 126 based at least in part on user preferences that can indicate a user-specific preference for one or more of overall value, cash benefits, travel benefits, protections and other specific terms described in transaction instrument terms 156. The user preferences can also include user specific prompt additions, such as a user-entered natural language text snippet that indicates how the option selection language model 126 should be fine-tuned.

The option selection language model 126 can also prevent fraud. The training data used to train the option selection language model 126 can include transaction data 178 that is verified to be associated with fraudulent transactions as well as transaction data 178 that is verified to be associated with non-fraudulent transactions. Certain transaction data 178 including textual data and image data be associated with fraud. By way of example, the option selection language model 126 can associate low resolution images and images that do not reflect the listed item or item type as potentially being associated with fraud. Particular price ranges for a particular item or type of item can be associated with fraudulently low or high pricing. As a result, the option selection language model 126 can be trained to flag or identify fraudulent transactions. If a particular transaction is indicated as fraudulent, in some examples the option selection agent 174 can return no selection or an empty set that includes no selected transaction instruments.

The enterprise computing environment 104 can provide an environment for the enterprise service 132, the enterprise-hosted provider application 134, and other applications, services, or components. The enterprise service 132 can refer to a website, web application, or other web service that references or otherwise uses a standards-compliant transaction handler corresponding to the transaction handler component 142. One example of a standards-compliant transaction handler component 142 can include a component of a payment handler that conforms to W3C promulgated standards or standards promulgated by another standards organization. The transaction handler component 142 can executed on the client device 106 as a portion of an application. The transaction handler component 142 can locally store pre-entered transaction instruments 143 that describe a user's transaction instruments to a client device 106. The enterprise-hosted provider application 134 can include a script or other instructions generated and provided by a provider entity associated with the provider service 122. The enterprise-hosted provider application 134 can communicate with the provider service 122 using a secure cross-domain communication method, such as a postMessage method.

The transaction facilitation computing environment 108 can provide an environment for the transaction facilitation website 152, and other executable instructions. The transaction facilitation computing environment 108 can also store transaction instrument accounts 154, transaction instrument terms 156. The transaction facilitation website 152 can refer to a banking service, credit providing service, a contract intermediary service, an information (e.g., PII) providing service, and other types of services that can facilitate the completion of various types of transactions. Transactions can include payment transactions, asset-based transactions, information-based transactions, and other transactions.

The transaction instrument accounts 154 can identify and manage information for transaction instruments that can include physically and/or digitally presented instruments used to facilitate a transaction. The transaction instrument account 154 can associate one or more individuals with one or more transaction instruments. The transaction instrument account 154 can list one or more unique user identifiers in association with one or more unique transaction instrument identifiers. Transaction instrument identifiers can include card numbers, account numbers, Uniform Resource Link (URL)-based transaction instrument identifiers, and/or another standardized identifiers. The transaction instrument account 154 can indicate a type of transaction instrument of a plurality of transaction instrument types provided and managed by the transaction facilitation website 152.

The transaction instrument terms 156 can refer to conditions, limitations, benefits, and other terms that define usage of a particular transaction instrument or type of transaction instrument. The benefits can include benefit types such as monetary rewards, points rewards, service offers, item or physical object rewards, digital item rewards, and so on. The transaction instrument terms 156 can indicate particular types of benefits apply to particular categories of transactions. The categories of transactions can include one or more of: value categories indicating a value of the transaction, item categories indicating a type of item or service purchased or subject to the transaction, or any combination thereof. Cart level details can include information such as a total value or price, a merchant type identifier, a tax amount, a transaction time and date, and so on. For example, transaction instrument terms 156 can indicate various different benefits corresponding to one or more of a particular value, a specified time of day when making a transaction, a merchant type, an item type, or any combination thereof.

The client device 106 can be representative of a plurality of client devices 106 that can be coupled to the network 112. The client device 106 can include a processor-based system such as a computer system. Such a computer system can be embodied in the form of a personal computer (e.g., a desktop computer, a laptop computer, or similar device), a mobile computing device (e.g., personal digital assistants, cellular telephones, smartphones, web pads, tablet computer systems, music players, portable game consoles, electronic book readers, and similar devices), media playback devices (*e.g.,* media streaming devices, BluRay^{®} players, digital video disc (DVD) players, set-top boxes, and similar devices), a videogame console, or other devices with like capability. The client device 106 can include one or more displays 164, such as liquid crystal displays (LCDs), gas plasma-based flat panel displays, organic light emitting diode (OLED) displays, electrophoretic ink ("E-ink") displays, projectors, or other types of display devices. In some instances, the displays 164 can be a component of the client device 106 or can be connected to the client device 106 through a wired or wireless connection.

The client device 106 can be configured to execute various client applications 170 such as a browser 171 and other applications. The client application 170 can be executed in a client device 106 to access network content served up by the computing environment 101 or other servers, thereby rendering a user interface 167 on the displays 164. To this end, the client application 170 can include a browser 171, a dedicated application, or other executable, and the user interface 167 can include a network page, an application screen, or other user mechanism for obtaining user input. The client device 106 can be configured to execute client applications 160 such as browser applications, chat applications, messaging applications, email applications, social networking applications, word processors, spreadsheets, or other applications.

The browser 171 can include a standards-compliant transaction handler component 142 that is utilized by the enterprise service 132. While the transaction handler component 142 can be referred to as a portion of the browser 171, the transaction handler component 142 can additionally or alternatively be incorporated into another client application 170. The transaction handler component 142 can store pre-entered transaction instruments 143. A user can interact with the browser 171 or another client application 170 to enter the pre-entered transaction instruments 143 for future use by the transaction handler component 142. Typically, the transaction handler component 142 can be designed to provide all pre-entered transaction instruments 143 as options when utilized without the language model-based option selection framework.

The provider service 122 can enable a user to register transaction instrument data 172 for a number of registered transaction instruments 173. The registered transaction instruments 173 can refer to transaction instruments registered using the provider service 122 and the option selection agent 174. The registered transaction instruments 173 can correspond to associated transaction instrument accounts 154. The transaction instrument data 172 can include a transaction instrument identifier such as a card number or another unique identification, as well as transaction facilitation website 152 information such as a network service address associated with transaction facilitation website 152. The transaction instrument data 172 can include respective transaction instrument terms 156 for respective ones of the registered transaction instruments 173.

The browser 171 can include an option selection agent 174. The option selection agent 174 can refer to a client-side instructions that work in conjunction with the provider service 122. For example, the provider service 122 can transmit a request or command to the option selection agent 174 to invoke the locally-stored option selection language model 126. The request can include textual and/or multimodal transaction data 178 for a particular transaction with the enterprise service 132. The option selection agent 174 can identify a set of locally registered transaction instruments 173, the associated transaction instrument terms 156 for each transaction instrument in the set, and a transaction history 176. The transaction history 176 can refer to a historical record of transaction data 178 stored locally to the client device 106. The option selection agent 174 can provide this data as input to the option selection language model 126.

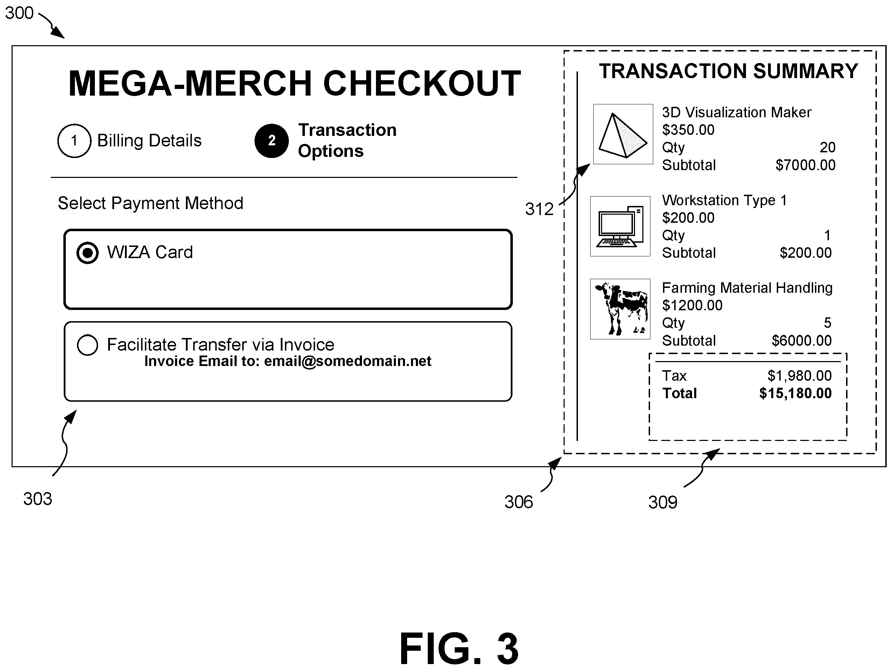

The option selection agent 174 can also store transaction history 176 including transaction data 178 for a number of previous transactions. This can include a transaction instrument (or set of instruments) that was selected by the option selection language model 126, a particular single transaction instrument that was utilized for the transaction, a transaction result indicating success or failure, and other transaction data 178. Transaction data 178 can include cart level detail. Cart level details can include information such as a total value or price, a merchant type identifier, a tax amount, a transaction time and date, and so on. Transaction data 178 can also include item level detail, such as item type identifiers for each item, one or more image for each item, a value or price for each item, a number of items, a subtotal value or price for a number of the item in the transaction, and so on. Merchant types can indicate a cart-specific or site-specific category and/or subcategory such as groceries, clothing, industrial, music, travel, dining, gas, online streaming services, and so on. Item types can include a particular manufacturer and model number as well as an item category. The item category can refer to an item-specific indication corresponding to any one or more of the categories and subcategories indicated for merchant types. The transaction data 178 can also include images of a portion of the enterprise service 132 where the transaction is initiated and/or completed. The images can include images one or more user interface screen of the enterprise service 132. The images can include all or a limited area of the one or more user interface screen (see FIG. 3).

Generally, the components of the networked environment 100 can operate in conjunction to enable a client-side option selection language model 126 to make a selection of one or more transaction instruments from a set of registered transaction instruments 173. The registered transaction instruments 173 can be registered locally to a client device 106 through interactions with a provider service 122. The enterprise service 132 can incorporate enterprise-hosted provider application 134. The enterprise-hosted provider application 134 can capture images and textual transaction data 178 associated with a transaction with the enterprise service 132. The enterprise-hosted provider application 134 can detect a specified user interface interaction in association with the transaction with the enterprise service 132. In response, the enterprise-hosted provider application 134 can provide captured transaction data 178 to the option selection agent 174 using a cross-domain communications method.

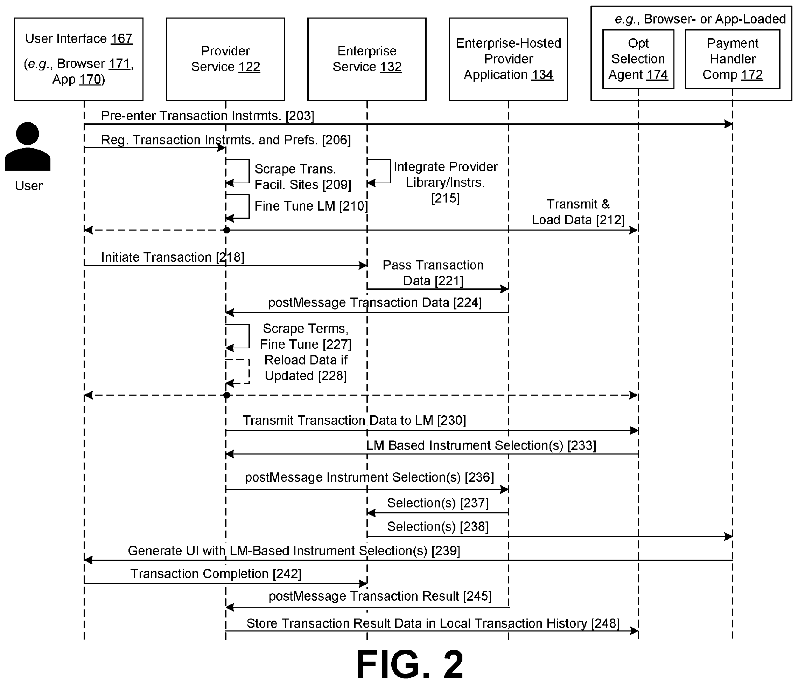

In some examples, the enterprise-hosted provider application 134 can also identify and provide updated transaction instrument terms 156. The option selection agent 174 can identify registered transaction instruments 173, associated transaction instrument terms 156, and a local transaction history 176. The option selection agent 174 can provide this information to the option selection language model 126 to make a selection of one or more transaction instruments from the registered transaction instruments 173. The option selection agent 174 can transmit the option selection to the enterprise-hosted provider application 134 using the cross-domain communications method. The enterprise-hosted provider application 134 can forward the selection to the enterprise service 132, which can provide this information to the transaction handler component 142. As a result, the standards-compliant transaction handler component 142 can present the language-model-selected transaction instrument(s) rather than all instruments. The overall framework can optimize benefits, predict user preference, and reduce potentially fraudulent transactions. The operation overrides the typical operation of the standards-compliant transaction handler component 142, which typically presents all transaction instruments pre-entered and stored locally in association with the transaction handler component 142. The overall framework is discussed in greater detail with respect to FIG. 2.

FIG. 2 shows a sequence diagram that describes how the components of the networked environment 100 of FIG. 1 can implement option selections. The sequence diagram of FIG. 2 can show a user interface 167, a provider service 122, an enterprise service 132, enterprise-hosted provider application 134, an option selection agent 174, and a transaction handler component 142. In this context, the user interface 167 can include a browser 171 or other application 170 on the client device 106 of FIG. 1. As an alternative, the sequence diagram of FIG. 2 can be viewed as depicting an example of elements of a method implemented by the components of the networked environment 100. While blocks are generally described as performed using a particular component, aspects of the blocks can include instructions executed by various components of the networked environment 100.

The user interface elements of the user interface 167 can be generated by the browser 171 or client application 170 using elements of respective web applications and websites of respective ones of the provider service 122 and the enterprise service 132. The user interface elements of the user interface 167 can also include elements generated using the transaction handler component 142. The browser 171 or other client application 170 can have access to a datastore or a portion of a datastore that is provided using data storage hardware of the client device 106. Actions discussed with reference to the browser 171 can alternatively be performed using any other client application 170.

In block 203, the browser 171 can identify a user interface interaction with the user interface 167 to pre-enter transaction instruments with the transaction handler component 142. The browser 171 and/or the transaction handler component 142 can generate user interface elements through which transaction instruments can be entered and stored in association with pre-entered transaction instruments 143. The transaction instrument data 172 can be stored locally to the client device 106.

In block 206, a user of the client device 106 can interact with the user interface 167 to register transaction instruments and preferences. In this interaction, the browser 171 can navigate to the provider service 122, and the user interface 167 can be updated to show user interface elements of the provider service 122. The provider service 122 can include provider-hosted instructions such as one or more scripts to perform certain actions. The provider service 122 can include a website or web application that provides user interface elements that enable a user to enter transaction instrument data 172 and register transaction instruments as registered transaction instruments 173. The provider service 122 can provide user interface elements that identify preferences for how to select transaction options such as transaction instruments. This information can be stored in a datastore available to the browser 171 of the client device 106, rather than in a datastore of the provider computing environment 102. In some examples, the provider service 122 does not store the transaction instrument data 172 and the registered transaction instruments 173.

In block 209, the provider service 122 can scrape transaction facilitation websites 152 and fine tune or train the option selection language model 126. In some examples, the provider service 122 can scrape the transaction facilitation websites 152 using a script or other provider-hosted instructions that identifies the transaction instrument terms 156. Scraping the transaction facilitation websites 152 can include extracting data from the transaction facilitation websites 152. Scraping the transaction facilitation websites 152 can include extracting image data such as a screen capture or image download of all or a portion of a website user interface generated by the transaction facilitation websites 152, which shows the transaction instrument terms 156.

Scraping the transaction facilitation websites 152 can include extracting textual data from Hypertext Markup Language (HTML) of the transaction facilitation websites 152 and/or performing image recognition on screen captures of image data. In some cases, the provider service 122 can scrape the transaction facilitation websites 152 periodically, on a schedule, and in response to events such as loading a checkout page of the enterprise service 132. Alternatively, since the registered transaction instruments are stored locally to the client device 106, the option selection agent 174 can scrape the transaction facilitation websites 152 periodically, on a schedule, and in response to events such as loading a checkout page of the enterprise service 132.

In block 210, the provider service 122 (or the option selection agent 174) can fine tune the option selection language model 126 based at least in part on user preferences that can indicate a user-specific preference for one or more of overall value, cash benefits, travel benefits, protections and other specific terms described in transaction instrument terms 156. The provider service 122 can fine tune the option selection language model 126 based at least in part on the set of available transaction instrument terms 156 corresponding to the registered transaction instruments 173. In some examples, the option selection language model 126 can be fine tuned and size optimized to make decisions limited to the set of registered transaction instruments 173.

In block 212, the provider service 122 can transmit and load the option selection language model 126 into local storage of the browser 171. The provider service 122 can generate the option selection language model 126. The provider service 122 can also generate a package that includes the option selection agent 174 and a version of the option selection language model 126 that is fine tuned for one or more user preference selections. The provider service 122 can generate package to include the registered transaction instruments 173 and associated transaction instrument data 172 such as transaction instrument terms 156, network locations of the associated transaction facilitation websites 152, authentication information, and so on. The provider service 122 can also generate summaries for respective ones of the transaction instrument terms 156. The provider service 122 can store the summaries as transaction instrument data 172 in the package. The provider service 122 can transmit the package, including the option selection agent 174, the option selection language model 126, the transaction instrument data 172, and the registered transaction instruments 173 to the client device 106. The browser 171 can load the package into local storage.

In block 215, the enterprise service 132 can integrate a provider library. This can include integrating the enterprise-hosted provider application 134 or script into a website or web application of the enterprise service 132.

In block 218, a user of the client device 106 can interact with the user interface 167 to initiate a transaction with the enterprise service 132. In this interaction, the browser 171 can navigate to an enterprise service 132, and the user interface 167 can be updated to show user interface elements of the enterprise service 132. The enterprise-hosted provider application 134 can operate as a script and/or subservice of the enterprise service 132 so that certain predetermined user interface interactions can trigger the enterprise-hosted provider application 134 to perform certain actions including capturing transaction data 178 including image data and textual data from the enterprise service 132.

In block 221, the enterprise-hosted provider application 134 can obtain transaction data 178 from the enterprise service 132. For example, adding an item to a cart can trigger the enterprise-hosted provider application 134 to capture image data and textual data associated with the item that is shown or textually described in the enterprise service 132. In some examples, the captured image and textual data can be limited to an enterprise- or provider-specified user interface area of an item page of the enterprise service 132. Navigating to the cart can trigger the enterprise-hosted provider application 134 to capture image data and textual data associated with the cart. In some examples, the captured image and textual data can be limited to an enterprise- or provider-specified user interface area of a cart page of the enterprise service 132. Navigating to a checkout page can trigger the enterprise-hosted provider application 134 to capture image data and textual data associated with the checkout page. In some examples, the captured image and textual data can be limited to an enterprise- or provider-specified user interface area of the checkout page of the enterprise service 132.

In block 224, the enterprise-hosted provider application 134 can transmit the transaction data 178 to the provider service 122 (e.g., provider script). In addition to capturing transaction data 178 such as image data and textual data, navigating to a checkout page can also trigger the enterprise-hosted provider application 134 to transmit the transaction data 178 to the provider service 122. The enterprise-hosted provider application 134 can transmit the transaction data 178 to the provider service 122 using a cross-domain communications method.

In block 227, the provider service 122 can again scrape transaction instrument terms 156 from the transaction facilitation website 152 website or web application. This can ensure that the scrape transaction instrument terms 156 are up to date at the time of the present transaction. In some examples, the scraping of transaction instrument terms 156 from the transaction facilitation website 152 occurs at checkout time rather than beforehand. The provider service 122 can additionally or alternatively scrape transaction instrument terms 156 from the transaction facilitation website 152 periodically, on launch of the browser 171, or on a schedule. In some examples, the scraping of transaction instrument terms 156 and fine tuning of the option selection language model 126 can be performed by the option selection agent 174. If the transaction instrument terms 156 have changed, the transaction instrument terms 156 can be provided along with the transaction data 178 in block 230.

In block 228, the provider service 122 can fine tune the option selection language model 126. The provider service 122 can fine tune the option selection language model 126 based at least in part on the updated set of available transaction instrument terms 156 scraped in block 227.

In block 230, the provider service 122 can transmit transaction data 178 to the option selection agent 174. This can be referred to as an option selection request. Updated transaction instrument terms 156 can be provided along with the transaction data 178. Alternatively, the option selection agent 174 can scrape the transaction facilitation website 152 to identify current transaction instrument terms 156 and compare them to the previous transaction instrument terms 156. If the current transaction instrument terms 156 are updated, then the option selection agent 174 can store them locally. The option selection agent 174 can identify the transaction instrument terms 156 and other transaction instrument data 172, a list of registered transaction instruments 173, and a transaction history 176 based at least in part on the option selection request. The option selection agent 174 can also provide the transaction instrument terms 156 and other transaction instrument data 172, the list of registered transaction instruments 173, and the transaction history 176 as inputs to the option selection language model 126 based at least in part on the option selection request. In some examples the transaction history 176 and the registered transaction instruments 173 are not stored by the provider service 122. Since the option selection language model 126 uses these items as inputs, using a client-device-stored-option selection language model 126 provide privacy and security for the transaction history 176 and the registered transaction instruments 173.

In block 233, the option selection agent 174 can transmit transaction instrument selection data to the provider service 122. The option selection language model 126 can output transaction instrument selection data specifying one or more transaction instruments based at least in part on the transaction instrument data 172, the registered transaction instruments 173, the transaction history 176, and the transaction data 178. For example, an optimal or best transaction instrument for the user could be selected based at least in part on the transaction instrument data 172, the registered transaction instruments 173, the transaction history 176, and the transaction data 178, such as a transaction instrument that would accrue the largest amount or value of rewards points or cash back or a transaction instrument that would result in a lowest price paid for the transaction. However, if the option selection language model 126 detects a potentially fraudulent transaction, then the option selection language model 126 can provide an empty set of transaction instrument selection data that specifies no transactions instruments.

The option selection language model 126 can also locally store a natural language explanation describing the information upon which the transaction is considered potentially fraudulent. For example, low resolution images and images that do not reflect a listed item or item type can indicate potential fraudulent transactions, particular price ranges for particular items or types of items can be associated with fraudulently low or high pricing. This data can be stored locally to the browser 171 such that when a user navigates to the provider service 122, the locally-stored data is provided, indicating a reason for why no transaction instrument selections were provided, and why fraud is suspected.

In block 236, the provider service 122 (e.g., provider script) can transmit the transaction instrument selection data to the enterprise-hosted provider application 134. In block 237, the enterprise-hosted provider application 134 can transmit the transaction instrument selection data to the enterprise service 132. In block 238, the enterprise service 132 can provide the transaction instrument selection data to the transaction handler component 142.

In block 239, the transaction handler component 142 and the enterprise service 132 can work in conjunction to generate a checkout page of the enterprise service 132. The checkout page of the enterprise service 132 can include a user interface area generated using the transaction handler component 142. The user interface area of the checkout page that is generated using the transaction handler component 142 can include transaction instruments limited to the transaction instrument selection data generated by the option selection language model 126.

In block 242, the user can navigate the user interface 167 of the browser 171 to complete a transaction with the enterprise service 132 using a selected one of the transaction instrument selection data that is provided using the transaction handler component 142.

In block 245, the enterprise-hosted provider application 134 (or the enterprise service 132) can transmit a transaction result to the provider service 122. For example, the enterprise service 132 can identify a transaction result such as a success or failure of the transaction using the selected one of the transaction instruments specified in the transaction instrument selection data. This can trigger the enterprise-hosted provider application 134 or the enterprise service 132 to transmit the transaction result to the provider service 122.

In block 248, the provider service 122 can provide transaction result data to the browser 171 and/or the option selection agent 174, which stores the transaction result data to the local transaction history 176. Since the transaction history 176 can be used as an input to the option selection language model 126, this data can affect subsequent transaction instrument selections. A user can navigate to the provider service 122 to view the locally stored transaction history 176, although it is not stored by the provider computing environment 102.

FIG. 3 illustrates an example of a checkout user interface 300 that illustrates aspects of language model-based option selection. The checkout user interface 300 can include a website or web application generated by the enterprise service 132 and the transaction handler component 142. The checkout user interface 300 can include a set of transaction instruments 303, which are referred to in the checkout user interface 300 as payment methods. The set of transaction instruments 303 can be provided in the enterprise service 132 using the transaction handler component 142. While the transaction handler component 142 can typically provide a set of all pre-entered transaction instruments stored by the browser 171 or client application 170, in this example, the set of transaction instruments 303 can be language model-based instrument selections that are selected by the option selection language model 126 according to the process discussed with respect to FIG. 2. For example, the set of transaction instruments 303 could include payment methods that the option selection language model 126 has determined to be the best or optimal payment methods for the user to use for the transaction involving the website or web application.

The checkout user interface 300 can include can also include the user interface area 306, and the user interface area 309. Navigating to the checkout user interface 300 can trigger the enterprise-hosted provider application 134 to capture image data and textual data as transaction data 178 for a transaction. In some examples, the captured image and textual data can be captured from an area of the user interface 300 that is limited to the user interface area 306, or the user interface area 309. For example, the user interface areas 306 and 309 can be predetermined enterprise- and/or provider-specified user interface areas of the checkout page of the enterprise service 132, as agreed upon by a provider of the provider service 122 and an enterprise corresponding to the enterprise service 132. While shown with respect to the checkout user interface 300, other user interface areas such as item detail pages or user interface areas, cart pages or user interface areas, and other portions of user interfaces of the enterprise service 132 can be specified for textual data and image data capture. In some examples, the entire checkout user interface 300 can be captured as image data, and all of the text can be captured.

The textual data can include item level details including the name of the various items subject to the transaction, including "3D Visualization Maker," "Workstation Type 1," and "Farming Material Handling." Each of these items can be captured and logically associated with textual data indicating the item price, quantity, and subtotal. For example, the "3D Visualization Maker" can be stored in a data structure in association with an item price of "350.00", a quantity of "20", and subtotal of "7000.00," and so on. Each of these items can be associated with one or more images. For example, the "3D Visualization Maker" can also be stored in association with the image 312. In some examples, the items can be stored in association with image data and textual data captured from a cart page, an item detail page, any page from which the item is added to a cart or otherwise added to a transaction.

The textual data can also include cart or transaction level details including the tax value here shown as "1,980.00", and the total of "15,180.00." The cart or transaction level details can also include textual data indicating a name of the enterprise such as "MEGA-MERCH," an image capture of a logo of the enterprise, an image capture of the main page, landing page, or home page of the enterprise service 132, or the initial page or interface of a web application.

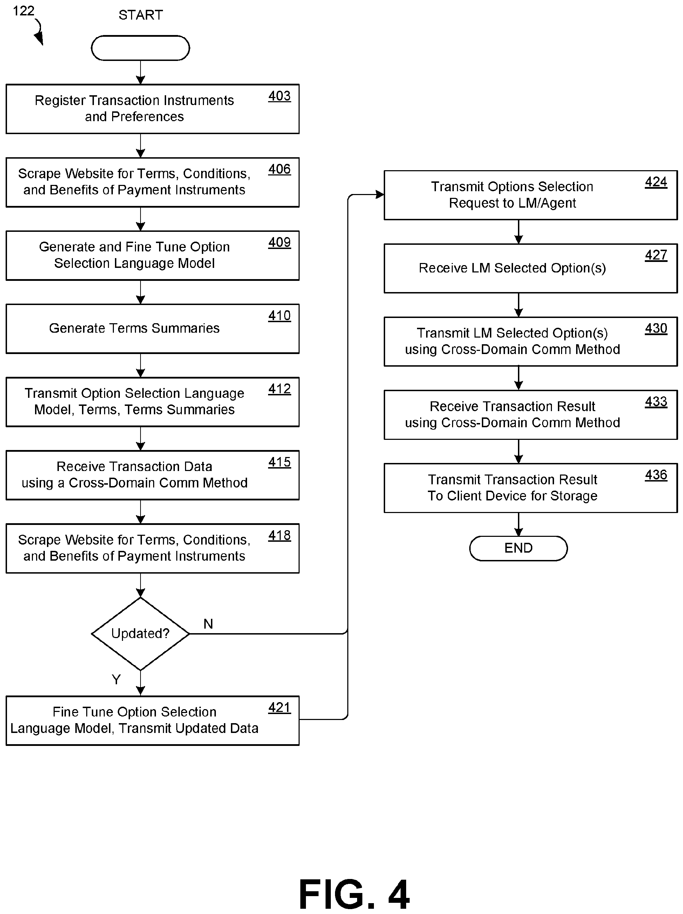

FIG. 4 is a flowchart illustrating functionality of the provider service 122 performed in conjunction with other components of the networked environment 100 to implement language model-based option selection. The blocks of the flowchart can be considered a method implemented by instructions executed by the provider computing environment 102. As an alternative, the flowchart of FIG. 4 can be viewed as depicting an example of elements of a method implemented by the provider service 122. While blocks are generally described as performed using a particular component, aspects of the blocks can include instructions executed by various components of the networked environment 100.

In block 403, the provider service 122 can generate and host a website or web application that can be accessed using a browser 171 or other client application 170. The provider service 122 can also include provider-hosted instructions such as one or more scripts that perform certain actions. The provider service 122 can include a website or web application that provides user interface elements that enable a user to enter transaction instrument data 172 and the registered transaction instruments 173, as well as user preferences for how to select transaction options such as transaction instruments.

In block 406, the provider service 122 can scrape a website of the transaction facilitation websites 152. The provider service 122 can scrape the transaction facilitation websites 152 using a script or other provider-hosted instructions that identifies the transaction instrument terms 156. The provider service 122 can identify a respective network address of a respective one of the transaction facilitation websites 152 corresponding to the registered transaction instruments 173. In some cases, the transaction instrument data 172 includes the respective network address, and in other examples the provider service 122 can use a format of a transaction instrument identifier of the registered transaction instruments 173 to identify a particular transaction facilitation website 152. The provider service 122 can map the identity of the transaction facilitation website 152 to a network address. Scraping the transaction facilitation websites 152 can include capturing image data such as a screen capture of all or a portion of a website user interface generated by the transaction facilitation websites 152, which shows the transaction instrument terms 156. Scraping the transaction facilitation websites 152 can include extracting textual data from Hypertext Markup Language (HTML) of the transaction facilitation websites 152 and/or performing image recognition on screen captures of image data.

In block 409, the provider service 122 fine tune an option selection language model 126 based at least in part on user preferences that can indicate a user-specific preference for one or more of overall value, cash benefits, travel benefits, protections and other specific terms described in transaction instrument terms 156. The user-specific preference can also include a user-entered natural language sentence, phrase or other string that indicates how to select transaction instruments from the set of registered transaction instruments 173. The provider service 122 can fine tune the option selection language model 126 based at least in part on the set of available transaction instrument terms 156 corresponding to the registered transaction instruments 173.

In block 410, the provider service 122 can generate summaries for respective ones of the transaction instrument terms 156. These transaction terms summaries can summarize the transaction instrument terms 156 into a readily understandable format. For example, a transaction terms summary can reformat the transaction instrument terms into a numbered list format, a bulleted list format, a paragraph, or another format.

In block 412, the provider service 122 can transmit the option selection language model 126, transaction instrument terms 156, and terms summaries to the client device 106 for local storage by the browser 171. The provider service 122 can generate a package that includes the option selection agent 174 and a version of the option selection language model 126 that is fine tuned for one or more user preference selections. The provider service 122 can also generate package to include the registered transaction instruments 173 and associated transaction instrument data 172 such as transaction instrument terms 156, network locations of the associated transaction facilitation websites 152, authentication information, and so on. The provider service 122 can store the transaction terms summaries as transaction instrument data 172 in the package. The provider service 122 can transmit the package, including the option selection agent 174, the option selection language model 126, the transaction instrument data 172, and the registered transaction instruments 173 to the client device 106. The browser 171 can load the package into local storage.

In block 415, the provider service 122 can receive transaction data 178 from the enterprise-hosted provider application 134. The provider service 122 can receive transaction data 178 from the enterprise-hosted provider application 134 using a cross-domain communications method. In some examples, the provider service 122 can host a script or other provider-hosted instructions that are designed to communicate with the enterprise-hosted provider application 134 using the cross-domain communications method.

In block 418, the provider service 122 can again scrape transaction instrument terms 156 from the transaction facilitation website 152 website or web application. This can ensure that the scrape transaction instrument terms 156 are up to date at the time of the present transaction. If the transaction instrument terms 156 are updated, then the process can move to block 421, otherwise, the process can move to block 424.

In block 421, the provider service 122 can perform one or more actions as discussed with respect to blocks 409 and 412. For example, the provider service 122 can fine tune the option selection language model 126 based at least in part on the set of updated transaction instrument terms 156 corresponding to the registered transaction instruments 173. The provider service 122 can transmit the option selection language model 126, transaction instrument terms 156, and terms summaries to the client device 106 for local storage by the browser 171. In some examples, the option selection language model 126 is not fine-tuned or updated and the provider service 122 can transmit the updated transaction instrument terms 156 and terms summaries to the option selection agent 174 so that they can be used as updated inputs to the previously provided option selection language model 126.

In block 424, the provider service 122 can transmit an option selection request to the option selection agent 174. The option selection request can include the transaction data 178 for a transaction. In some examples, the updated transaction instrument terms 156, terms summaries, and an updated option selection language model 126 can be transmitted along with the option selection request rather than separately.

In block 427, the provider service 122 can receive transaction instrument selection data from the option selection agent 174. The option selection agent 174 can identify the transaction instrument terms 156 and other transaction instrument data 172, a list of registered transaction instruments 173, and a transaction history 176 based at least in part on the option selection request. The option selection agent 174 can use this data as input to the option selection language model 126 to generate transaction instrument selection data specifying transaction instrument selections. This could be done to select an optimal transaction instrument for the transaction, such as a transaction instrument that would accrue the largest amount or value of rewards points or cash back or a transaction instrument that would result in a lowest price paid for the transaction.

In block 430, the provider service 122 can transmit the transaction instrument selection data to the enterprise-hosted provider application 134. This can cause the enterprise-hosted provider application 134 to transmit the transaction instrument selection data to the enterprise service 132, which causes the enterprise service 132 to provide the transaction instrument selection data to the transaction handler component 142. The transaction can then be completed with one of the transaction instruments specified in the transaction instrument selection data.

In block 433, the provider service 122 can receive a transaction result from the enterprise-hosted provider application 134 or the enterprise service 132. For example, the transaction result can indicate a success or failure of the transaction using the selected one of the transaction instruments specified in the transaction instrument selection data.

In block 436, the provider service 122 can provide transaction result data to the browser 171 and/or the option selection agent 174, which stores the transaction result data to the local transaction history 176 on the client device 106. Since the transaction history 176 can be used as an input to the option selection language model 126, this data can affect subsequent transaction instrument selections. A user can navigate to the provider service 122 to view the locally stored transaction history 176, although it is not stored by the provider computing environment 102.

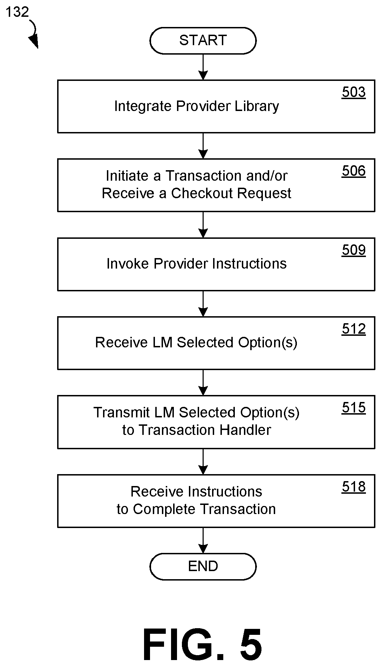

FIG. 5 is a flowchart illustrating functionality of the enterprise service 132 performed in conjunction with other components of the networked environment 100 to implement language model-based option selection. The blocks of the flowchart can be considered a method implemented by the enterprise service 132. As an alternative, the flowchart of FIG. 5 can be viewed as depicting an example of elements of a method implemented by the enterprise service 132. While blocks are generally described as performed using a particular component, aspects of the blocks can include instructions executed by various components of the networked environment 100.

In block 503, the enterprise service 132 can integrate a provider library. The enterprise service 132 can also integrate the enterprise-hosted provider application 134 into a website or web application of the enterprise service 132. This can enable the enterprise service 132 to provide transaction data 178 to the provider service 122.

In block 506, the enterprise service 132 can initiate a transaction and/or receive a checkout request. The enterprise service 132 can include a website or web application with a number of pages or screens. The browser 171 can navigate to an enterprise service 132, and a user interface 167 can be updated to show user interface elements of the enterprise service 132. In some examples, the enterprise service 132 can identify certain actions performed using the user interface elements of the enterprise service 132, and trigger the enterprise-hosted provider application 134. Additionally or alternatively, the enterprise-hosted provider application 134 can identify the predetermined actions performed using the user interface elements of the enterprise service 132 and trigger corresponding actions.

In block 509, the enterprise service 132 can invoke or trigger the enterprise-hosted provider application 134 based at least in part on actions initiating or furthering a transaction. For example, the enterprise service 132 can identify that an item is added to a cart. The enterprise service 132 can trigger the enterprise-hosted provider application 134 indicating that the item has been added to the cart. This can operate as a request for the enterprise-hosted provider application 134 to identify textual and image data as transaction data 178, as discussed above.

The enterprise service 132 can determine that user interactions with the browser 171 have navigated to a checkout page. The enterprise service 132 can trigger the enterprise-hosted provider application 134 indicating that the checkout page is loading. This can operate as a request for the enterprise-hosted provider application 134 to capture image data and textual data associated with the checkout page, and/or transmit transaction data 178 for the transaction to the provider service 122. The enterprise-hosted provider application 134 can transmit transaction data 178 to the provider service 122 using a cross-domain communications method.

In block 512, the enterprise service 132 can receive language model generated transaction instrument selection data from the enterprise-hosted provider application 134. The enterprise-hosted provider application 134 can receive transaction instrument selection data from the provider service 122 using a cross-domain communications method. The transaction instrument selection data can specify one or more transaction instruments based at least in part on the transaction instrument data 172, the registered transaction instruments 173, the transaction history 176, and the transaction data 178. For example, an optimal or best transaction instrument for the user could be selected based at least in part on the transaction instrument data 172, the registered transaction instruments 173, the transaction history 176, and the transaction data 178, such as a transaction instrument that would accrue the largest amount or value of rewards points or cash back or a transaction instrument that would result in a lowest price paid for the transaction.

In block 515, the enterprise service 132 can transmit or otherwise provide the transaction instrument selection data to the transaction handler component 142 of the browser 171 or client application 170. The enterprise service 132 can also instruct the browser 171 to generate the checkout page using the transaction handler component 142. As a result, the browser 171 can show a checkout page that includes the transaction instruments specified in the transaction instrument selection data, rather than all registered transaction instruments 173.

In block 518, the enterprise service 132 can receive instructions to complete a transaction. The browser 171 can provide user interface interaction data indicating to complete the transaction using a selected one of the transaction instruments specified in the transaction instrument selection data. In some examples, the enterprise service 132 can also transfer a transaction fulfillment request to the transaction facilitation website 152. The enterprise service 132 can identify success or failure of this request as a transaction result. The enterprise service 132 can transmit the transaction result to the provider service 122, for example, using the enterprise-hosted provider application 134. The transaction result can be communicated using a cross-domain communications method.

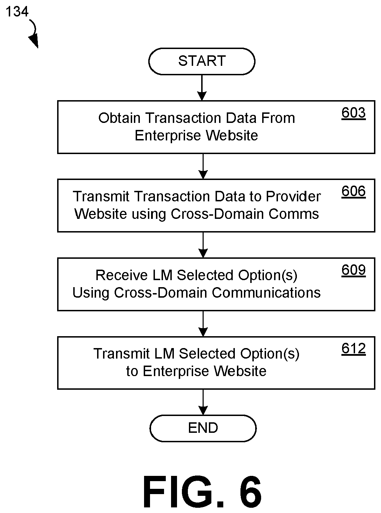

FIG. 6 is a flowchart illustrating functionality of the enterprise-hosted provider application 134 performed in conjunction with other components of the networked environment 100 to implement language model-based option selection. The blocks of the flowchart can be considered a method implemented by the enterprise-hosted provider application 134. As an alternative, the flowchart of FIG. 6 can be viewed as depicting an example of elements of a method implemented by the enterprise-hosted provider application 134. While blocks are generally described as performed by the enterprise-hosted provider application 134, aspects of the blocks can include instructions executed by various components of the networked environment 100.

In block 603, the enterprise-hosted provider application 134 can obtain transaction data 178 from an enterprise service 132 such as a website or web application. As indicated with respect to FIG. 5, the enterprise service 132 can integrate the enterprise-hosted provider application 134 to operate in conjunction with a website or web application of the enterprise service 132. This can enable the enterprise service 132 to provide transaction data 178 to the provider service 122.

The enterprise-hosted provider application 134 can identify the predetermined actions performed using the user interface elements of the enterprise service 132 and trigger corresponding actions. For example, the enterprise-hosted provider application 134 can identify that an item is added to a cart of the enterprise service 132. This can trigger the enterprise-hosted provider application 134 to capture textual and image data as transaction data 178 from the page of the enterprise service 132 where the item was added to the cart. The enterprise-hosted provider application 134 can also identify that the browser 171 has navigated to the checkout page of the enterprise service 132. This can trigger the enterprise-hosted provider application 134 to capture textual and image data as transaction data 178 from the checkout page of the enterprise service 132.

In block 606, the enterprise-hosted provider application 134 can use a cross-domain communications method to transmit transaction data 178 to the provider hosted service 122 such as a website. The enterprise-hosted provider application 134 can determine that user interactions with the browser 171 have navigated to a checkout page, or that the checkout page is loading. This can trigger the enterprise-hosted provider application 134 to perform actions including transmitting transaction data 178 for the transaction to the provider service 122. The enterprise-hosted provider application 134 can transmit transaction data 178 to the provider service 122 using a cross-domain communications method.

In block 609, the enterprise-hosted provider application 134 can receive transaction instrument selection data from the provider service 122 using a cross-domain communications method. The provider service 122 can perform actions that identify language model selected options such as transaction instrument selections that are specified in the transaction instrument selection data and can provide these selections to the enterprise-hosted provider application 134 using the cross-domain communications method. The transaction instrument selections could include optimal or best transaction instruments for the transaction, such as a transaction instrument that has a highest reward or award rate for the transaction (e.g., due to a high rewards rate for the card generally, a high rewards rate for the category of the transaction specifically, or a bonus offer) or a transaction instrument that would result in a lowest price paid for the transaction (e.g., due to an associated merchant offer, discount offered by the issuer, *etc*.)*.*

In block 609, the enterprise-hosted provider application 134 can transmit the language model selected options to the enterprise service 132 or website. This can cause the enterprise service 132 to generate a user interface 167 where the transaction handler component 142 provides language model selected instruments rather than all registered transaction instruments 173. In some examples, the enterprise-hosted provider application 134 can also receive a transaction result from the enterprise service 132 and transmit the transaction result to the provider service 122 using a cross-domain communications method.

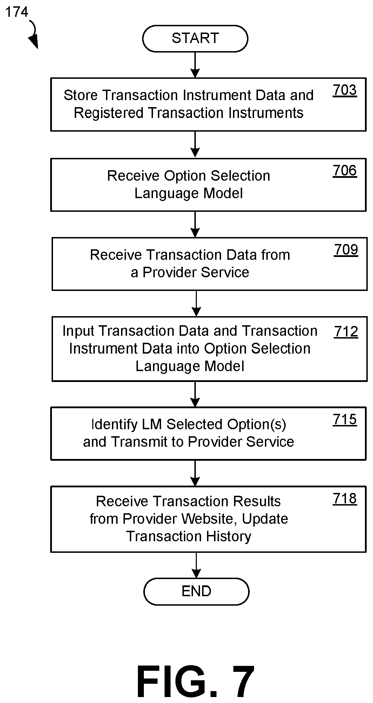

FIG. 7 is a flowchart illustrating functionality of the option selection agent 174 performed in conjunction with other components of the networked environment 100 to implement language model-based option selection. The blocks of the flowchart can be considered a method implemented by the option selection agent 174. As an alternative, the flowchart of FIG. 7 can be viewed as depicting an example of elements of a method implemented by the option selection agent 174. While blocks are generally described as performed by the option selection agent 174, aspects of the blocks can include instructions executed by various components of the networked environment 100.

In block 703, the option selection agent 174 can store transaction instrument data 172 and registered transaction instruments 173. For example, the browser 171 can navigate to the provider service 122, and the user interface 167 can be updated to show user interface elements of the provider service 122. The provider service 122 can include a website or web application. The provider service 122 can cause the browser 171 to load and store the option selection agent 174 locally to the client device 106. The provider service 122 can also provide user interface elements that enable a user to enter transaction instrument data 172 and the registered transaction instruments 173, as well as user preferences for how to select transaction options such as transaction instruments. The option selection agent 174 store this information in the client device 106, rather than in a datastore of the provider computing environment 102.

In block 706, the option selection agent 174 can receive an option selection language model 126. The option selection agent 174 can receive the option selection language model 126 from the provider service 122. In some examples, the option selection agent 174 can be installed or loaded with an option selection language model 126. However, in other examples the provider service 122 can initially provide the option selection agent 174 without an option selection language model 126. The option selection agent 174 can be loaded as a component that operates in conjunction with a browser 171 or another client application 170. In examples where the option selection agent 174 can be installed or loaded with an option selection language model 126, the option selection agent 174 can receive an updated option selection language model 126 from the provider service 122. The option selection agent 174 can store the option selection language model 126 in a local datastore.

In block 709, the option selection agent 174 can receive transaction data 178 from a provider service 122. The provider service 122 can receive transaction data 178 from the enterprise service 132 by way of the enterprise-hosted provider application 134. The provider service 122 can provide this transaction data 178 to the option selection agent 174 to enable using the option selection language model 126 for option selections such as selection of transaction instruments. The provider service 122 can transmit the transaction data 178 along with a request or command to the option selection agent 174 to invoke the locally-stored option selection language model 126.

In block 712, the option selection agent 174 can provide transaction data 178 and transaction instrument data 172 as input to the option selection language model 126. The option selection agent 174 can then identify a set of locally registered transaction instruments 173, the transaction instrument terms 156 for each transaction instrument in the set, and a locally stored transaction history 176. The option selection agent 174 can provide this data as input to the option selection language model 126. The option selection language model 126 can generate transaction instrument selection data that specifies a subset of the registered transaction instruments 173. For example, the option selection model 126 could select one or more registered transaction instruments 173 the are potentially an optimal or best transaction instrument for the transaction. For instance, a first registered transaction instrument 173 in the subset of registered transaction instruments could represent a transaction instrument would accrue the largest amount or value of rewards points or cash back (e.g., due to a high rewards rate for the card generally, a high rewards rate for the category of the transaction specifically, or a bonus offer). Meanwhile, a second registered transaction instrument 173 in the subset of registered transaction instruments 173 could include a registered transaction instrument 173 that would result in a lowest price paid for the transaction (e.g., due to an associated merchant offer, discount offered by the issuer, *etc*.).

If the option selection language model 126 determines that the transaction is fraudulent or potentially fraudulent, then the option selection language model 126 can return an empty set with no transaction instruments specified.

In block 712, the option selection agent 174 can transmit the transaction instrument selection data to the provider service 122. The provider service 122 can forward the transaction instrument selection data to the enterprise service 132 by way of the enterprise-hosted provider application 134. This can enable the enterprise service 132 to generate a user interface 167 that provides the subset of the registered transaction instruments 173 that are specified in the transaction instrument selection datal through the transaction handler component 142.

In block 712, the option selection agent 174 can receive transaction results from the provider service 122. The provider service 122 can receive the transaction results from the enterprise service 132 by way of the enterprise-hosted provider application 134. However, in some examples the provider service 122 does not store the transaction results in the provider computing environment 102. Rather, the provider service 122 transmits transaction results to the option selection agent 174. The option selection agent 174 can store the transaction results in the transaction history 176.

A number of software components previously discussed are stored in the memory of the respective computing devices and are executable by the processor of the respective computing devices. In this respect, the term "executable" means a program file that is in a form that can ultimately be run by the processor. Examples of executable programs can be a compiled program that can be translated into machine code in a format that can be loaded into a random-access portion of the memory and run by the processor, source code that can be expressed in proper format such as object code that is capable of being loaded into a random-access portion of the memory and executed by the processor, or source code that can be interpreted by another executable program to generate instructions in a random-access portion of the memory to be executed by the processor. An executable program can be stored in any portion or component of the memory, including random-access memory (RAM), read-only memory (ROM), hard drive, solid-state drive, Universal Serial Bus (USB) flash drive, memory card, optical disc such as compact disc (CD) or digital versatile disc (DVD), floppy disk, magnetic tape, or other memory components.

The memory includes both volatile and nonvolatile memory and data storage components. Volatile components are those that do not retain data values upon loss of power. Nonvolatile components are those that retain data upon a loss of power. Thus, the memory can include random-access memory (RAM), read-only memory (ROM), hard disk drives, solid-state drives, USB flash drives, memory cards accessed via a memory card reader, floppy disks accessed via an associated floppy disk drive, optical discs accessed via an optical disc drive, magnetic tapes accessed via an appropriate tape drive, or other memory components, or a combination of any two or more of these memory components. In addition, the RAM can include static random-access memory (SRAM), dynamic random-access memory (DRAM), or magnetic random-access memory (MRAM) and other such devices. The ROM can include a programmable read-only memory (PROM), an erasable programmable read-only memory (EPROM), an electrically erasable programmable read-only memory (EEPROM), or other like memory device.

Although the applications and systems described herein can be embodied in software or code executed by general purpose hardware as discussed above, as an alternative the same can also be embodied in dedicated hardware or a combination of software/general purpose hardware and dedicated hardware. If embodied in dedicated hardware, each can be implemented as a circuit or state machine that employs any one of or a combination of a number of technologies. These technologies can include, but are not limited to, discrete logic circuits having logic gates for implementing various logic functions upon an application of one or more data signals, application specific integrated circuits (ASICs) having appropriate logic gates, field-programmable gate arrays (FPGAs), or other components, *etc.* Such technologies are generally well known by those skilled in the art and, consequently, are not described in detail herein.

The flowcharts and sequence diagrams show the functionality and operation of an implementation of portions of the various embodiments of the present disclosure. If embodied in software, each block can represent a module, segment, or portion of code that includes program instructions to implement the specified logical function(s). The program instructions can be embodied in the form of source code that includes human-readable statements written in a programming language or machine code that includes numerical instructions recognizable by a suitable execution system such as a processor in a computer system. The machine code can be converted from the source code through various processes. For example, the machine code can be generated from the source code with a compiler prior to execution of the corresponding application. As another example, the machine code can be generated from the source code concurrently with execution with an interpreter. Other approaches can also be used. If embodied in hardware, each block can represent a circuit or a number of interconnected circuits to implement the specified logical function or functions.

Although the flowcharts and sequence diagrams show a specific order of execution, it is understood that the order of execution can differ from that which is depicted. For example, the order of execution of two or more blocks can be scrambled relative to the order shown. Also, two or more blocks shown in succession can be executed concurrently or with partial concurrence. Further, in some embodiments, one or more of the blocks shown in the flowcharts and sequence diagrams can be skipped or omitted. In addition, any number of counters, state variables, warning semaphores, or messages could be added to the logical flow described herein, for purposes of enhanced utility, accounting, performance measurement, or providing troubleshooting aids, *etc.* It is understood that all such variations are within the scope of the present disclosure.

The sequence diagrams and flowcharts provide a general description of the operation of the various components. Although the general descriptions can provide provides an example of the interactions between the various components, other interactions between the various components are also possible according to various embodiments of the present disclosure. Interactions described with respect to a particular figure or sequence diagram can also be performed in relation to the other figures and sequence diagrams herein.

Also, any logic or application described herein that includes software or code can be embodied in any non-transitory computer-readable medium for use by or in connection with an instruction execution system such as a processor in a computer system or other system. In this sense, the logic can include statements including instructions and declarations that can be fetched from the computer-readable medium and executed by the instruction execution system. In the context of the present disclosure, a "computer-readable medium" can be any medium that can contain, store, or maintain the logic or application described herein for use by or in connection with the instruction execution system. Moreover, a collection of distributed computer-readable media located across a plurality of computing devices (e.g., storage area networks or distributed or clustered filesystems or databases) can also be collectively considered as a single non-transitory computer-readable medium.

The computer-readable medium can include any one of many physical media such as magnetic, optical, or semiconductor media. More specific examples of a suitable computer-readable medium would include, but are not limited to, magnetic tapes, magnetic floppy diskettes, magnetic hard drives, memory cards, solid-state drives, USB flash drives, or optical discs. Also, the computer-readable medium can be a random-access memory (RAM) including static random-access memory (SRAM) and dynamic random-access memory (DRAM), or magnetic random-access memory (MRAM). In addition, the computer-readable medium can be a read-only memory (ROM), a programmable read-only memory (PROM), an erasable programmable read-only memory (EPROM), an electrically erasable programmable read-only memory (EEPROM), or other type of memory device.

Further, any logic or application described herein can be implemented and structured in a variety of ways. For example, one or more applications described can be implemented as modules or components of a single application. Further, one or more applications described herein can be executed in shared or separate computing devices or a combination thereof. For example, a plurality of the applications described herein can execute in the same computing device, or in multiple computing devices in the same computing environment.

Disjunctive language such as the phrase "at least one of X, Y, or Z," unless specifically stated otherwise, is otherwise understood with the context as used in general to present that an item, term, etc., can be either X, Y, or Z, or any combination thereof (e.g., X; Y; Z; X or Y; X or Z; Y or Z; X, Y, or Z; *etc.*). Thus, such disjunctive language is not generally intended to, and should not, imply that certain embodiments require at least one of X, at least one of Y, or at least one of Z to each be present.

It should be emphasized that the above-described embodiments of the present disclosure are merely possible examples of implementations set forth for a clear understanding of the principles of the disclosure. Many variations and modifications can be made to the above-described embodiments without departing substantially from the spirit and principles of the disclosure. All such modifications and variations are intended to be included herein within the scope of this disclosure and protected by the following claims.

However, examples of the claimed embodiments, and variations thereof, are set forth in the following clauses:
Clause 1 - A system, comprising: at least one computing device comprising at least one processor and at least one memory; and machine-readable instructions stored in the at least one memory that, when executed by the at least one processor, cause the at least one computing device to at least: register a plurality of transaction instruments in association with transaction instrument data, wherein the transaction instrument data is received from a client device based at least in part on user interactions with a user interface; scrape a plurality of transaction facilitation websites to identify a plurality of sets of transaction instrument terms for the plurality of registered transaction instruments; generate an option selection language model that is trained to select a subset of the plurality of registered transaction instruments based at least in part on inputs comprising transaction data and the transaction instrument terms for the plurality of registered transaction instruments; and transmit, to the client device, data comprising the option selection language model, the transaction instrument data, and the plurality of sets of transaction instrument terms.
Clause 2 -- The system of clause 1, wherein the machine-readable instructions, when executed by the at least one processor, cause the at least one computing device to at least: generate a transaction terms summary for a respective one of the plurality of sets of transaction instrument terms, wherein the data transmitted to the client device comprises the transaction terms summary.
Clause 3 - The system of clause 1 or 2, wherein the machine-readable instructions, when executed by the at least one processor, cause the at least one computing device to at least: receive, using a cross-domain communications method, the transaction data for a particular transaction with an enterprise website.
Clause 4 - The system of clause 3, wherein the machine-readable instructions, when executed by the at least one processor, cause the at least one computing device to at least: transmit the transaction data to the client device as a request to invoke the option selection language model; and receive, from the client device, transaction instrument selection data generated by the option selection language model.
Clause 5 - The system of claim 4, wherein the machine-readable instructions, when executed by the at least one processor, cause the at least one computing device to at least: transmit, using the cross-domain communications method, the transaction instrument selection data generated by the option selection language model.
Clause 6 - The system of any of clauses 1-5, wherein the transaction data comprises at least one of: image data, textual data, or any combination thereof, and wherein the transaction data is captured from an enterprise website offering the transaction.
Clause 7 - The system of any of clauses 1-6, wherein the subset of the plurality of registered transaction instruments include at least one transaction instrument that is optimal for a transaction.
Clause 8 - A computer-implemented method, comprising: receiving, by a provider service, transaction data for a particular transaction with an enterprise website, wherein the transaction data is received using a cross-domain communications method; scraping, by the provider service, a plurality of transaction facilitation websites to identify a plurality of sets of transaction instrument terms for a plurality of registered transaction instruments; transmitting, by the provider service to a client device, a request to invoke an option selection language model stored on the client device, the request comprising the transaction data and the plurality of sets of transaction instrument terms; receiving, by the provider service, transaction instrument selection data generated by the option selection language model; and transmitting, by the provider service, the transaction instrument selection data using the cross-domain communications method.
Clause 9 - The method of clause 8, further comprising: register the plurality of transaction instruments in association with transaction instrument data, wherein the transaction instrument data is received from the client device based at least in part on user interactions with a user interface and the transaction instrument data specifies an optimal transaction instrument for the particular transaction.
Clause 10 - The method of clause 8 or 9, further comprising: receiving, using a cross-domain communications method, a transaction result for the particular transaction with the enterprise website.
Clause 11 - The method of claim 10, further comprising: transmitting, the transaction result to the client device for storage.
Clause 12 - The method of any of clauses 8-11, wherein the transaction data comprises textual data extracted from the enterprise website.
Clause 13 - The method of any of clauses 8-11, wherein the transaction data comprises image data captured from the enterprise website.
Clause 14 - The method of any of clauses 8-13, further comprising: generating a transaction terms summary for a respective one of the plurality of sets of transaction instrument terms; and transmitting the transaction terms summary to the client device.
Clause 15 - A system, comprising: at least one computing device comprising at least one processor and at least one memory; and machine-readable instructions stored in the at least one memory that, when executed by the at least one processor, cause the at least one computing device to at least: receive transaction data for a particular transaction with an enterprise website, wherein the transaction data is received using a cross-domain communications method; transmit, to a client device, a request to invoke an option selection language model stored on the client device, the request comprising the transaction data; receive transaction instrument selection data generated by the option selection language model, wherein the transaction instrument selection data specifies at least a subset of a plurality of registered transaction instruments; and transmit the transaction instrument selection data using the cross-domain communications method.
Clause 16 - The system of clause 15, wherein the machine-readable instructions, when executed by the at least one processor, cause the at least one computing device to at least: register the plurality of transaction instruments in association with transaction instrument data, wherein the transaction instrument data is received from the client device based at least in part on user interactions with a user interface and the transaction instrument data specifies an optimal transaction instrument for the particular transaction; scrape a plurality of transaction facilitation websites to identify a plurality of sets of transaction instrument terms for the plurality of registered transaction instruments, wherein the plurality of transaction facilitation websites are scraped based at least in part on the plurality of transaction instruments being registered; and transmit the transaction instrument terms and the option selection language model to the client device.
Clause 17 - The system of clause 15 or 16, wherein the machine-readable instructions, when executed by the at least one processor, cause the at least one computing device to at least: scrape a plurality of transaction facilitation websites to identify a plurality of sets of transaction instrument terms for the plurality of registered transaction instruments, wherein the plurality of transaction facilitation websites are scraped based at least in part on the transaction data being received.
Clause 18 - The system of any of clauses 15-17, wherein the machine-readable instructions, when executed by the at least one processor, cause the at least one computing device to at least: receive, using a cross-domain communications method, a transaction result for the particular transaction with the enterprise website.
Clause 19 - The system of clause 18, wherein the machine-readable instructions, when executed by the at least one processor, cause the at least one computing device to at least: transmit, the transaction result to the client device for storage.
Clause 20 - The method of any of clauses 15-19, wherein the transaction data comprises at least one of textual data extracted from the enterprise website, image data captured from the enterprise website, or any combination thereof.

## Claims

1. A system, comprising:
at least one computing device comprising at least one processor and at least one memory; and
machine-readable instructions stored in the at least one memory that, when executed by the at least one processor, cause the at least one computing device to at least:
register a plurality of transaction instruments in association with transaction instrument data, wherein the transaction instrument data is received from a client device based at least in part on user interactions with a user interface;
scrape a plurality of transaction facilitation websites to identify a plurality of sets of transaction instrument terms for the plurality of registered transaction instruments;
generate an option selection language model that is trained to select a subset of the plurality of registered transaction instruments based at least in part on inputs comprising transaction data and the transaction instrument terms for the plurality of registered transaction instruments; and
transmit, to the client device, data comprising the option selection language model, the transaction instrument data, and the plurality of sets of transaction instrument terms.

2. The system of claim 1, wherein the machine-readable instructions, when executed by the at least one processor, cause the at least one computing device to at least:
generate a transaction terms summary for a respective one of the plurality of sets of transaction instrument terms, wherein the data transmitted to the client device comprises the transaction terms summary.

3. The system of claim 1 or 2, wherein the machine-readable instructions, when executed by the at least one processor, cause the at least one computing device to at least:
receive, using a cross-domain communications method, the transaction data for a particular transaction with an enterprise website.

4. The system of claim 3, wherein the machine-readable instructions, when executed by the at least one processor, cause the at least one computing device to at least:
transmit the transaction data to the client device as a request to invoke the option selection language model; and
receive, from the client device, transaction instrument selection data generated by the option selection language model.

5. The system of claim 4, wherein the machine-readable instructions, when executed by the at least one processor, cause the at least one computing device to at least:
transmit, using the cross-domain communications method, the transaction instrument selection data generated by the option selection language model.

6. The system of any of claims 1-5, wherein the transaction data comprises at least one of: image data, textual data, or any combination thereof, and wherein the transaction data is captured from an enterprise website offering the transaction.

7. The system of any of claims 1-6, wherein the subset of the plurality of registered transaction instruments include at least one transaction instrument that is optimal for a transaction.

8. A computer-implemented method, comprising:
receiving, by a provider service, transaction data for a particular transaction with an enterprise website, wherein the transaction data is received using a cross-domain communications method;
scraping, by the provider service, a plurality of transaction facilitation websites to identify a plurality of sets of transaction instrument terms for a plurality of registered transaction instruments;
transmitting, by the provider service to a client device, a request to invoke an option selection language model stored on the client device, the request comprising the transaction data and the plurality of sets of transaction instrument terms;
receiving, by the provider service, transaction instrument selection data generated by the option selection language model; and
transmitting, by the provider service, the transaction instrument selection data using the cross-domain communications method.

9. The method of claim 8, further comprising:
register the plurality of transaction instruments in association with transaction instrument data, wherein the transaction instrument data is received from the client device based at least in part on user interactions with a user interface and the transaction instrument data specifies an optimal transaction instrument for the particular transaction.

10. The method of claim 8 or 9, further comprising:
receiving, using a cross-domain communications method, a transaction result for the particular transaction with the enterprise website.

11. The method of claim 10, further comprising:
transmitting, the transaction result to the client device for storage.

12. The method of any of claims 8-11, wherein the transaction data comprises textual data extracted from the enterprise website.

13. The method of any of claims 8-12, wherein the transaction data comprises image data captured from the enterprise website.

14. The method of any of claims 8-13, further comprising:
generating a transaction terms summary for a respective one of the plurality of sets of transaction instrument terms; and
transmitting the transaction terms summary to the client device.
